# EUROPÄISCHE PATENTSCHRIFT

(11) **EP 3 983 575 B1**
(45) Veröffentlichungstag und Bekanntmachung des Hinweises auf die Patenterteilung: **19.04.2023**
(21) Anmeldenummer: 20732178.7
(22) Anmeldetag: 08.06.2020
(51) Int. Cl.: C25B 1/04, C25B 1/13, C25B 1/26, C25B 1/30, C25B 9/17, C25B 11/083, C25C 1/00, C25C 7/02, C02F 1/46, C02F 1/461, C02F 1/467

(54) **ELEKTROLYSEVORRICHTUNG MIT ZWEI BOR DOTIERTEN DIAMANTSCHICHTEN**
ELECTROLYSIS DEVICE HAVING TWO BORON DOPED DIAMOND LAYERS
DISPOSITIF D'ÉLECTROLYSE COMPRENANT DEUX COUCHES DE DIAMANT DOPÉES AU BORE

(30) Priorität: 12.06.2019 DE 102019115956
(43) Veröffentlichungstag der Anmeldung: 20.04.2022
(73) Patentinhaber: Friedrich-Alexander-Universität Erlangen-Nürnberg, 91054 Erlangen (DE)
(72) Erfinder: BORCHARDT, Rudolf, 91058 Erlangen (DE); FROMM, Timo, 92331 Parsberg (DE); GHANEM, Hanadi, 91058 Erlangen (DE); GÖLTZ, Maximilian, 91096 Möhrendorf (DE); HELMREICH, Thomas, 90475 Nürnberg (DE); ROSIWAL, Stefan, 96049 Bamberg (DE)
(74) Vertreter: Dr. Gassner & Partner mbB
(86) Internationale Anmeldenummer: PCT/EP2020/065858
(87) Internationale Veröffentlichungsnummer: WO 2020/249519

(56) Entgegenhaltungen:
- WO-A1-2018/100356
- US-A1- 2012 312 353
- PROVENT ET AL: "Boron-doped diamond electrodes and microelectrode-arrays for the measurement of sulfate and peroxodisulfate", ELECTROCHIMICA ACTA, ELSEVIER, AMSTERDAM, NL, Bd. 49, Nr. 22-23, 15. September 2004 (2004-09-15), Seiten 3737-3744, XP005231263, ISSN: 0013-4686, DOI: 10.1016/J.ELECTACTA.2004.02.047

## Beschreibung

Die Erfindung betrifft eine Vorrichtung zur Elektrolyse, insbesondere zur Elektrolyse eines wässrigen Elektrolyten, sowie ein Verfahren zur Elektrolyse und eine Verwendung nach dem Oberbegriff des Patentanspruchs 1.

Eine solche Vorrichtung ist aus der WO 2018/100356 A1 bekannt.

Die US 2012/312353 A1 sowie Provent et al.: "Boron-doped diamond electrodes and microelectrode-arrays for the measurement of sulfate and peroxodisulfate", Electrochimica Acta, Elsevier, Amsterdam, NL, Bd. 49, Nr. 22-23, 15. September 2004, Seiten 3737-3744 offenbaren eine Dotierung von Diamantschichten mit Bor.

Die WO 2005/113860 offenbart eine großflächige Elektrode, welche aus einer Vielzahl von Substraten hergestellt ist. Die Substrate sind randlich mittels einer elektrisch leitfähigen Verbindung miteinander zu einem mechanisch stabilen Elektrodenkörper verbunden. Der Elektrodenkörper ist, zumindest auf ihrer einen Seite mit einer elektrisch leitfähigen Diamantschicht versehen. Solche Elektroden eignen sich insbesondere zur Verwendung als Anode bei der Behandlung von Abwasser.

In jüngerer Zeit besteht ein Bedarf an Vorrichtungen zur Herstellung von Ozon, OH-Radikalen u. dgl. Solche Vorrichtungen werden beispielsweise in Haushaltswaschmaschinen zur Desinfektion eingesetzt. Eine solche Waschmaschine ist beispielsweise aus der EP 1 975 299 B1 bekannt. Die derzeit verwendeten Vorrichtungen zur Herstellung von Ozon verwenden zur Erzeugung von Ozon Luft. Dabei entstehen unerwünschterweise auch giftige Stickoxide.

Aufgabe der Erfindung ist es, die Nachteile nach dem Stand der Technik zu beseitigen. Es soll insbesondere eine Vorrichtung zur Elektrolyse mit verbesserter Haltbarkeit angegeben werden. Nach einem weiteren Ziel der Erfindung soll die Vorrichtung auch miniaturisiert nach Art eines Chips herstellbar sein. Die Vorrichtung soll eine einfache und kostengünstige Durchführung eines Verfahrens zur Elektrolyse ermöglichen.

Diese Aufgabe wird durch die Merkmale der unabhängigen Patentansprüche gelöst. Zweckmäßige Ausgestaltungen der Erfindung ergeben sich aus den Merkmalen der abhängigen Patentansprüche.

Nach Maßgabe der Erfindung wird eine Vorrichtung zur Elektrolyse vorgeschlagen, bei der die erste und die zweite Diamantschicht durch einen elektrisch isolierenden Pfad voneinander getrennt und so angeordnet sind, dass bei Anlegen einer Spannung zwischen der ersten und der zweiten Diamantschicht sich ein elektrisches Feld ausbildet, dessen Feldlinien zumindest teilweise quer zu einer Längserstreckungsrichtung des Pfads verlaufen.

Die erste und die zweite Diamantschicht sind wegen der erfindungsgemäß vorgeschlagenen Dotierung mit Bor elektrisch leitfähig. Indem die erste und die zweite Diamantschicht gemeinsam auf einem Substrat vorgesehen sind, kann die Herstellung vereinfacht werden. Die Vorrichtung kann auch nach Art eines Chips miniaturisiert hergestellt werden.

Vorteilhafterweise ist der Diamant mit 100 bis 10.000 ppm Bor dotiert. Die vorgeschlagene Dotierung verleiht dem Diamant eine zur Durchführung der Elektrolyse ausreichende elektrische Leitfähigkeit.

Nach einer weiteren Ausgestaltung ist das Substrat (i) aus einem elektrisch isolierenden Material hergestellt oder (ii) aus einem elektrisch leitfähigen Material hergestellt, welches an seiner den Diamantschichten zugewandten Oberseite mit einer elektrisch isolierenden Schicht versehen ist. In jedem Fall sind die erste und die zweite Diamantschicht voneinander elektrisch isoliert, so dass sie als Anode und Kathode wirken können. - Unter einem "elektrisch isolierenden Material" wird ein Material verstanden, dessen elektrische Leitfähigkeit weniger als 10⁻² S/m aufweist. - Das elektrisch isolierende Material weist insbesondere im Verhältnis zum damit in Kontakt befindlichen Elektrolyten eine geringere elektrische Leitfähigkeit auf. Ein elektrisch leitfähiges Material weist dagegen eine wesentlich höhere elektrische Leitfähigkeit von in der Regel mehr als 10 S/m, vorzugsweise mehr als 10² S/m, insbesondere mehr als 10⁶ S/m, auf.

Das elektrisch isolierende Material oder die elektrisch isolierende Schicht ist zweckmäßigerweise zumindest aus einem der folgenden Materialien gebildet: Metalloxid, Si, SiC, Diamant, SiO₂, Schamotte, Keramik, insbesondere Porzellan, oder Glas. Als Metalloxid kann beispielsweise Al₂O₃ oder MgO verwendet werden. Ferner ist es denkbar, als elektrisch isolierendes Substrat SiC oder undotiertes Si, und als elektrisch isolierende Schicht eine Diamantschicht vorzusehen, welche nicht mit Bor dotiert ist. Es ist auch denkbar, eine mit Bor dotierte CVD-Diamantfolie mit einem Substrat zu verbinden. Die Verbindung kann in diesem Fall beispielsweise mit einer Polymer-Klebschicht, Diffusionsschweißen, einem Lot oder dgl. erfolgen. Es ist auch möglich, eine CVD-Diamantschicht mit einer Metallschicht zu versehen, welche dann mittels Ultraschallschweißen mit einer metallischen Unterlage verbunden werden kann. CVD-Diamantfolien sind aus der EP 2 403 974 B1 bekannt.

Nach einer weiteren vorteilhaften Ausgestaltung kann zwischen der ersten und/oder zweiten Diamantschicht und dem elektrisch isolierenden Substrat oder der elektrisch isolierenden Schicht eine elektrisch leitfähige Zwischenschicht vorgesehen sein, welche z. B. aus Ti, Nb oder Ta gebildet ist. Das Vorsehen der vorgeschlagenen elektrisch leitfähigen Zwischenschicht ermöglicht eine bessere Verteilung des elektrischen Stroms. Das ermöglicht insbesondere auch die Herstellung großflächiger Vorrichtungen zur Elektrolyse. Abgesehen davon bilden die vorgenannten Metalle beim CVD-Verfahren Metallcarbide. Metallcarbide wiederum tragen zu einer hervorragenden Haftung der im CVD-Verfahren hergestellten Diamantschicht auf der elektrisch leitfähigen Zwischenschicht bei.

Die erste und/oder die zweite Diamantschicht und/oder die elektrisch isolierende Schicht und/oder die elektrisch leitfähige Zwischenschicht werden zweckmäßigerweise mittels CVD-Verfahren hergestellt. Insbesondere die elektrisch leitfähige Zwischenschicht kann auch mittels PVD-Verfahren hergestellt werden.

Es hat sich als zweckmäßig erwiesen, dass eine Dicke der ersten und zweiten Diamantschicht 1 bis 100 µm beträgt. Weiterhin ist es vorteilhaft, dass eine dem Substrat gegenüberliegende Oberfläche der ersten und zweiten Diamantschicht jeweils zu mehr als 50 % aus Facetten gebildet ist, welche die (111) oder (001) Ebenen von Diamantkristallen, vorzugsweise von zusammengewachsenen Diamanteinkristallen, bilden. Diamantschichten mit den vorgenannten Merkmalen sind besonders haltbar, insbesondere besonders beständig gegen Oxidation.

Weiter hat es sich als zweckmäßig erwiesen, dass die Diamanteinkristalle sich überwiegend in einer [111]- oder [110]-Richtung vom Substrat oder einer zwischen dem Substrat und der jeweiligen Diamantschicht vorgesehenen Zwischenschicht zur Oberfläche der Diamantschicht erstrecken.

Zur Herstellung der erfindungsgemäßen Vorrichtung wird die mit Bor dotierte Diamantschicht zweckmäßigerweise zunächst als einheitliche Schicht mittels CVD-Verfahren auf dem Substrat bzw. einer auf dem Substrat vorgesehenen elektrisch isolierenden Schicht oder Zwischenschicht aufgetragen. Anschließend wird die elektrisch leitfähige Diamantschicht vorzugsweise mittels eines Lasers in die erste und die zweite Diamantschicht getrennt. Die erste und die zweite Diamantschicht sind erfindungsgemäß durch einen elektrisch isolierenden Pfad voneinander getrennt. Der Pfad weist zweckmäßigerweise eine Breite von 2 bis 500 µm auf. Vorteilhafterweise ist der Pfad mäanderförmig ausgebildet. Wegen des vorgeschlagenen geringen Abstands zwischen den einander gegenüberliegenden Elektroden ist es möglich, die erfindungsgemäße Vorrichtung mit niedrigen Arbeitsspannungen, insbesondere weniger als 10 V, zu betreiben. Dabei verlaufen die elektrischen Feldlinien nur zwischen der Anode und der Kathode. Sie stehen insbesondere nahezu nicht senkrecht zur Oberfläche der Diamantschicht, so dass eine Zersetzung der die Diamantschicht haltenden Zwischenschicht durch anodische Oxidation nicht möglich ist. Die vorgeschlagene Vorrichtung eignet sich insbesondere zur Elektrolyse von Wasser, insbesondere zur Erzeugung von Ozon aus Wasser.

Nach einer weiteren Ausgestaltung ist auf der ersten und/oder zweiten Diamantschicht abschnittsweise eine Metallschicht vorgesehen. Die Metallschicht ist vorzugsweise in einem Abschnitt außerhalb des Pfads vorgesehen. Die Metallschicht dient der gleichmäßigen Verteilung des der Diamantschicht zugeführten Stroms. Sie ist zweckmäßigerweise aus einem selbstpassivierenden Metall oder aus einem Edelmetall gebildet. Bei dem Metall und/oder Edelmetall kann es sich selbstverständlich auch um geeignete Legierungen handeln.

Das Metall kann als Hauptbestandteil eines der folgenden Elemente enthalten: Ti, Ta, Nb, Cr, Al, W, Au, Ag.

Zwischen der Metallschicht und der Oberfläche der ersten und/oder zweiten Diamantschicht ist zweckmäßigerweise eine aus einem Metallkarbid, vorzugsweise TiC oder WC, gebildete weitere Zwischenschicht vorgesehen. Die weitere Zwischenschicht dient der Verbesserung des Anhaftens der Metallschicht auf der Diamantschicht.

Auf der ersten und/oder zweiten Diamantschicht kann zumindest abschnittsweise eine Deckschicht aus einem elektrisch isolierenden Material, vorzugsweise aus Diamant, vorgesehen sein. Eine solche Deckschicht wirkt der unbeabsichtigten Bildung von Kurzschlüssen entgegen. Die Deckschicht lässt sich insbesondere beim CVD-Verfahren einfach herstellen, indem nach dem Aufbringen der ersten und/oder zweiten Diamantschicht die Bor-Dotierung weggelassen wird, d. h. als Deckschicht eine undotierte Diamantschicht auf die erste und/oder zweite Diamantschicht aufgetragen wird.

Nach einer weiteren Ausgestaltung ist auf der Metallschicht die Deckschicht oder eine weitere Deckschicht aus einem elektrisch isolierenden Material vorgesehen.

Die weitere Deckschicht kann eine Passivierungsschicht und/oder eine aus einem Polymer gebildete Schicht sein. Die vorgenannten Schichten können eine Dicke im Bereich von 0,001 µm bis 10.000 µm aufweisen. Sie dienen beim Betrieb dazu, eine durch Wasserstoff bedingte Versprödung im Bereich der Kathode und/oder eine Oxidation im Bereich der Anode zu vermindern.

Sofern die erste und zweite Diamantschicht mit einer elektrisch isolierenden Deckschicht und/oder weiteren elektrisch isolierenden Deckschicht überlagert und/oder mit einer elektrisch leitfähigen Zwischenschicht unterlagert sind, durchgreift der Pfad auch die Deckschicht, die weitere Deckschicht und/oder die elektrisch leitfähige Zwischenschicht.

Nach weiterer Maßgabe der Erfindung wird ein Verfahren zur Elektrolyse, insbesondere zur Herstellung von OH-Radikalen, oxidierten Chlorverbindungen, Oxidantien, Ozon, Wasserstoff Sauerstoff und/oder zur kathodischen Fällung von Metallen oder Metallverbindungen, mit folgenden Schritten vorgeschlagen:
Inkontaktbringen der ersten und zweiten Diamantschicht der erfindungsgemäßen Vorrichtung mit einem wässrigen Elektrolyten, und
Anlegen einer Spannung von 3 bis 60 Volt zwischen der ersten und zweiten Diamantschicht, wobei sich ein elektrisches Feld ausbildet, dessen Feldlinien quer zu einer Längserstreckungsrichtung des Pfads verlaufen.

Unter Verwendung der erfindungsgemäßen Vorrichtung eignet sich das vorgeschlagene Verfahren zur effizienten Herstellung insbesondere von Ozon, OH-Radikalen u. dgl. Bei der Elektrolyse kann ein Strom von 1 bis 10.000 mA/cm² angelegt werden.

Mit der erfindungsgemäßen Vorrichtung ist es möglich, an der Anode bspw. OH-Radikale und sich daraus ergebende oxidierende Stoffe, wie Ozon, Peroxide zu erzeugen. Aus Elektrolyten, welche Chlor-Ionen enthalten, können z. B. Chlor sowie Chloroxide gebildet werden. An der Kathode bzw. im an die Kathode angrenzenden Elektrolyten können bspw. Kalzium, viele Schwermetalle, wie Eisen, Uran, Kobalt, Nickel, edle Metalle, wie bspw. Kupfer, sowie Schwefel und Arsen entweder in Reinform oder in Form von Verbindungen, z. B. Hydroxid-, Carbonat-, Sulfat- oder Phosphatverbindungen, abgeschieden werden. Die erfindungsgemäße Vorrichtung ist nicht auf eine Elektrolyse im Kontakt mit einem wässrigen Elektrolyten beschränkt. Es ist auch denkbar, die erfindungsgemäße Vorrichtung mit einem nicht-wässrigen Elektrolyten zur Herstellung von gewünschten Stoffen zu verwenden.

Die erfindungsgemäße Vorrichtung kann insbesondere zur Entkalkung oder zur Entfernung von Schwermetallen aus Wasser verwendet werden. Durch Umpolung ist eine Ablösung abgeschiedener Stoffe von den Diamantoberflächen möglich. Abgelöste festen Stoffe können aus der flüssigen Phase bspw. durch Filtrierung abgetrennt werden.

Nachfolgend werden Ausführungsbeispiele der Erfindung anhand der Zeichnung näher erläutert. Es zeigen:
Fig. 1 eine schematische Schnittansicht durch die Schichtabfolge einer ersten Vorrichtung,
Fig. 2 eine schematische Querschnittsansicht durch die Schichtabfolge einer zweiten Vorrichtung,
Fig. 3 eine schematische Querschnittsansicht durch eine Schichtabfolge einer dritten Vorrichtung,
Fig. 4 eine schematische Draufsicht auf eine Vorrichtung zur Elektrolyse,
Fig. 5 eine schematische Schnittansicht durch eine auf einer Zwischenschicht aufgebrachte erste Diamantschicht,
Fig. 6 eine schematische Querschnittsansicht durch eine Schichtabfolge einer vierten Vorrichtung,
Fig. 7 eine schematische Draufsicht auf die Vorrichtung gemäß Fig. 6.

Bei der in Fig. 1 gezeigten ersten Vorrichtung ist auf einem elektrisch leitenden Substrat 1, welches beispielsweise aus Ti hergestellt sein kann, eine elektrisch isolierende Schicht 2 vorgesehen. Die elektrisch isolierende Schicht 2 kann beispielsweise aus nicht-dotiertem Diamant hergestellt sein. Ein Widerstand der elektrisch isolierenden Schicht 2 ist insbesondere bei der Verwendung der Vorrichtung mit einem wässrigen Elektrolyten größer als der Widerstand von Wasser.

Auf der elektrisch isolierenden Schicht 2 sind die erste Diamantschicht 3 und die zweite Diamantschicht 4 vorgesehen. Die erste 3 und die zweite Diamantschicht 4 sind durch einen Pfad 5 elektrisch voneinander getrennt. Der Pfad 5 kann optional auch die elektrisch isolierende Schicht 2 durchgreifen (hier nicht gezeigt).

Bei der in Fig. 2 gezeigten zweiten Vorrichtung ist auf einem elektrisch isolierenden Substrat 6 eine elektrisch leitfähige Zwischenschicht 7 vorgesehen, auf welcher die erste 3 und die zweite Diamantschicht 4 vorgesehen sind. Der Pfad 5 durchgreift sowohl die erste 3 und zweite Diamantschicht 4, als auch die elektrisch leitende Zwischenschicht 7. Das elektrisch isolierende Substrat 6 kann beispielsweise aus Porzellan, SiC, Al₂O₃ oder dgl. hergestellt sein. Die elektrisch leitfähige Zwischenschicht 7 kann beispielsweise aus Ti, Nb oder Ta hergestellt sein. - Die elektrisch leitfähige Zwischenschicht 7 kann auch weggelassen werden. In diesem Fall ist also die erste 3 und die zweite Diamantschicht 4 unmittelbar auf dem elektrisch isolierenden Substrat 6 vorgesehen, wobei sich zwischen den Diamantschichten 3, 4 und dem Substrat 6 eine karbidische Zwischenschicht mit einer Dicke im Bereich von 1 nm bis 10.000 nm befinden kann.

Bei der in Fig. 3 gezeigten dritten Vorrichtung ist in Abweichung zu der in Fig. 2 gezeigten zweiten Vorrichtung auf der ersten 3 und der zweiten Diamantschicht 4 jeweils eine Deckschicht 8 vorgesehen, welche aus einem elektrisch isolierenden Material gebildet ist. Es kann sich dabei um einen elektrisch isolierenden Diamant handeln.

Fig. 4 zeigt eine Draufsicht auf eine erfindungsgemäße Vorrichtung, wie sie etwa der ersten oder zweiten Vorrichtung gemäß den Fig. 1 oder 2 entspricht. Die erste Diamantschicht 3 und die zweite Diamantschicht 4 sind durch den Pfad 5 elektrisch voneinander getrennt. Der Pfad 5 kann eine Breite B im Bereich von 2 bis 500 µm aufweisen. Der Pfad 5 wird zweckmäßigerweise nach dem Aufbringen einer mit Bor dotierten leitfähigen Diamantschicht auf ein elektrisch isolierendes Substrat oder eine elektrisch isolierende Schicht mittels Laser oder Ionenätzen hergestellt. Er weist zweckmäßigerweise einen mäandrierenden Verlauf auf.

Fig. 5 zeigt schematisch einen Ausschnitt der in Fig. 2 gezeigten Vorrichtung. Auf einer beispielsweise aus Ti hergestellten elektrisch leitfähigen Zwischenschicht 7 ist eine TiC-Schicht 9 gebildet, welche als Wachstumsschicht für die Diamantkristalle dient. Von der TiC-Schicht 9 erstrecken sich zu mehr als 50 % Diamanteinkristalle 10. Die mit dem Bezugszeichen 11 bezeichneten Facetten der Diamanteinkristalle 10 sind entweder aus der (111)- oder der (001)-Ebene gebildet. Das Bezugszeichen P bezeichnet die Wachstumsrichtung der Diamanteinkristalle 10.

Eine Oberfläche O der ersten Diamantschicht 3 wird durch die Gesamtheit der Facetten 11 gebildet. - Die zweite Diamantschicht 4 ist analog zur ersten Diamantschicht 3 ausgebildet.

Ein Stromfluss erfolgt zwischen der ersten 3 und der zweiten Diamantschicht 4 im Wesentlichen senkrecht zur Wachstumsrichtung P bzw. quer zum Pfad 5.

Fig. 6 zeigt eine schematische Querschnittsansicht durch die Schichtabfolge einer vierten Vorrichtung. Die vierte Vorrichtung ist ähnlich der zweiten Vorrichtung gemäß Fig. 2 ausgebildet. Auf einer Oberfläche der ersten Diamantschicht 3 und der zweiten Diamantschicht 4 ist hier jeweils abschnittsweise eine Metallschicht 12 vorgesehen. Die Metallschicht 12 kann optional - wie in Fig. 6 gezeigt - mittels einer zwischengelagerten Metallkarbidschicht 13 an die Oberfläche der Diamantschichten 3, 4 angebunden sein. Zum Schutz der Metallschicht 12 kann auf deren Oberfläche eine Polymerschicht 14 vorgesehen sein. Anstelle der Polymerschicht 14 kann auch eine Passivierungsschicht vorgesehen sein. Die Polymerschicht und/oder die Passivierungsschicht sind optional.

Fig. 7 zeigt eine schematische Draufschicht auf die vierte Vorrichtung gemäß Fig. 6. Die Metallschicht 12 ist lediglich in Abschnitten auf der ersten 3 und der zweiten Diamantschicht 4 vorgesehen, welche sich außerhalb der den mäandrierenden Pfad 5 bildenden Strukturen befinden.

### Bezugszeichenliste

- 1: elektrisch leitendes Substrat
- 2: elektrisch isolierende Schicht
- 3: erste Diamantschicht
- 4: zweite Diamantschicht
- 5: Pfad
- 6: elektrisch isolierendes Substrat
- 7: elektrisch leitfähige Zwischenschicht
- 8: Deckschicht
- 9: TiC-Schicht
- 10: Diamanteinkristall
- 11: Facette
- 12: Metallschicht
- 13: Metallkarbidschicht
- 14: Polymerschicht

- B: Breite
- O: Oberfläche
- P: Wachstumsrichtung

## Patentansprüche

1. Vorrichtung zur Elektrolyse, umfassend ein Substrat (1, 6), auf welchem eine aus einer ersten Diamantschicht (3) gebildete Anode und eine aus einer zweiten Diamantschicht (4) gebildete Kathode vorgesehen sind, wobei die erste (3) und die zweite Diamantschicht (4) jeweils aus mit Bor dotiertem Diamant hergestellt sind,
**dadurch gekennzeichnet, dass**
die erste (3) und die zweite Diamantschicht (4) durch einen elektrisch isolierenden Pfad (5) voneinander getrennt und so angeordnet sind, dass bei Anlegen einer Spannung zwischen der ersten (3) und der zweiten Diamantschicht (4) sich ein elektrisches Feld ausbildet, dessen Feldlinien zumindest teilweise quer zu einer Längserstreckungsrichtung des Pfads (5) verlaufen.

2. Vorrichtung nach Anspruch 1, wobei der Diamant mit 100 bis 10.000 ppm Bor dotiert ist.

3. Vorrichtung nach einem der vorhergehenden Ansprüche, wobei das Substrat (1, 6) (i) aus einem elektrisch isolierenden Material hergestellt oder (ii) aus einem elektrisch leitfähigen Material hergestellt, welches an seiner den Diamantschichten zugewandten Oberseite mit einer elektrisch isolierenden Schicht (2) versehen ist.

4. Vorrichtung nach Anspruch 3, wobei das elektrisch isolierende Material oder die elektrisch isolierende Schicht (2) zumindest aus einem der folgenden Materialien gebildet ist: Metalloxid, Si, SiC, Diamant, SiO₂, Schamotte, Keramik, vorzugsweise Porzellan, oder Glas.

5. Vorrichtung nach Anspruch 3 oder 4, wobei zwischen der ersten (3) und/oder zweiten Diamantschicht (4) und dem elektrisch isolierenden Substrat (6) oder der elektrisch isolierenden Schicht (2) eine elektrisch leitfähige Zwischenschicht (7) vorgesehen ist, welche vorzugsweise aus Ti, Nb oder Ta gebildet ist.

6. Vorrichtung nach einem der vorhergehenden Ansprüche, wobei die erste (3) und/oder die zweite Diamantschicht (4) und/oder die elektrisch isolierende Schicht (2) und/oder die elektrisch leitfähige Zwischenschicht (7) mittels CVD-Verfahren hergestellt sind.

7. Vorrichtung nach einem der vorhergehenden Ansprüche, wobei eine Dicke der ersten (3) und zweiten Diamantschicht (4) 5 bis 100 µm beträgt.

8. Vorrichtung nach einem der vorhergehenden Ansprüche, wobei eine dem Substrat (1, 6) gegenüberliegende Oberfläche (O) der ersten (3) und zweiten Diamantschicht (4) jeweils zu mehr als 50 % aus Facetten (11) gebildet ist, welche die (111) oder (001) Ebenen von Diamantkristallen, vorzugsweise von zusammengewachsenen Diamanteinkristallen (10), bilden.

9. Vorrichtung nach Anspruch 8, wobei die Diamanteinkristalle (10) sich überwiegend in einer [111] oder [110]-Richtung vom Substrat (1, 6) oder einer zwischen dem Substrat (1, 6) und der jeweiligen Diamantschicht (3, 4) vorgesehenen Zwischenschicht (7) zur Oberfläche (O) der jeweiligen Diamantschicht (3, 4) erstrecken.

10. Vorrichtung nach einem der vorhergehenden Ansprüche, wobei der Pfad (5) eine Breite von 2 bis 500 µm aufweist.

11. Vorrichtung nach einem der vorhergehenden Ansprüche, wobei der Pfad (5) mäanderförmig ausgebildet ist.

12. Vorrichtung nach einem der vorhergehenden Ansprüche, wobei auf der ersten (3) und/oder zweiten Diamantschicht (4) in einem Abschnitt außerhalb des Pfads eine Metallschicht (12) vorgesehen ist.

13. Vorrichtung nach Anspruch 12, wobei die Metallschicht (12) aus einem selbstpassivierenden Metall oder aus einem Edelmetall gebildet ist.

14. Vorrichtung nach Anspruch 13, wobei das Metall als Hauptbestandteil eines der folgenden Elemente enthält: Ti, Ta, Nb, Cr, Al, W, Au, Ag.

15. Vorrichtung nach einem der Ansprüche 12 bis 14, wobei zwischen der Metallschicht (12) und der Oberfläche (O) der ersten (3) und/oder zweiten Diamantschicht (4), eine aus einem Metallkarbid, vorzugsweise TiC oder WC, gebildete weitere Zwischenschicht (13) vorgesehen ist.

16. Vorrichtung nach einem der vorhergehenden Ansprüche, wobei auf der ersten (3) und/oder zweiten Diamantschicht (4) zumindest abschnittsweise eine Deckschicht (8) aus einem elektrisch isolierenden Material, vorzugsweise aus Diamant, vorgesehen ist.

17. Vorrichtung nach einem der Ansprüche 12 bis 16, wobei auf der Metallschicht (12) die Deckschicht (8) oder eine weitere Deckschicht (14) aus einem elektrisch isolierenden Material vorgesehen ist.

18. Verfahren zur Elektrolyse, insbesondere zur Herstellung von OH-Radikalen, oxidierten Chlorverbindungen, Oxidantien, Ozon, Wasserstoff, Sauerstoff und/oder zur kathodischen Fällung von Metallen oder Metallverbindungen, mit folgenden Schritten:
Inkontaktbringen der ersten (3) und zweiten Diamantschicht (4) der Vorrichtung nach einem der vorhergehenden Ansprüche mit einem wässrigen Elektrolyten, und
Anlegen einer Spannung von 3 bis 60 Volt zwischen der ersten (3) und zweiten Diamantschicht (4), wobei sich ein elektrisches Feld ausbildet, dessen Feldlinien zumindest teilweise quer zu einer Längserstreckungsrichtung des Pfads (5) verlaufen.

19. Verwendung der Vorrichtung nach einem der Ansprüche 1 bis 17 zur Herstellung von OH-Radikalen, oxidierten Chlorverbindungen, Ozon, Wasserstoff und/oder Sauerstoff.

## Claims

1. An electrolysis device comprising a substrate (1, 6) on which an anode formed of a first diamond layer (3) and a cathode formed of a second diamond layer (4) are provided, said first (3) and second diamond layers (4) each being made of boron-doped diamond,
**characterized in that**
the first (3) and the second diamond layer (4) are separated from each other by an electrically insulating path (5) and are arranged in such a way that, when a voltage is applied between the first (3) and the second diamond layer (4), an electric field is formed, the field lines of which run at least partially transversely to a longitudinal extension direction of the path (5).

2. The device of claim 1, wherein the diamond is doped with 100 to 10,000 ppm boron.

3. The device according to any one of the preceding claims, wherein the substrate (1, 6) is (i) made of an electrically insulating material or (ii) made of an electrically conductive material which is provided with an electrically insulating layer (2) on its upper side facing the diamond layers.

4. The device according to claim 3, wherein the electrically insulating material or the layer (2) is formed of at least one of the following materials: metal oxide, Si, SiC, diamond, SiO₂, fireclay, ceramic, preferably porcelain, or glass.

5. The device according to claim 3 or 4, wherein between the first (3) and/or the second diamond layer (4) and the electrically insulating substrate (6) or the electrically insulating layer (2) an electrically conductive intermediate layer (7) is provided, which is preferably formed of Ti, Nb or Ta.

6. The device according to any one of the preceding claims, wherein the first (3) and/or the second diamond layer (4) and/or the electrically insulating layer (2) and/or the electrically conductive intermediate layer (7) are produced by means of a CVD process.

7. The device according to any one of the preceding claims, wherein a thickness of the first (3) and second diamond layers (4) is 5 to 100 µm.

8. The device according to any one of the preceding claims, wherein a surface (O) of the first (3) and second diamond layers (4) facing the substrate (1, 6) is formed by more than 50% each of facets (11) forming the (111) or (001) planes of diamond crystals, preferably of diamond single crystals (10) grown together.

9. The device according to claim 8, wherein the diamond single crystals (10) extend predominantly in a [111] or [110] direction from the substrate (1, 6) or an intermediate layer (7) provided between the substrate (1, 6) and the respective diamond layer (3, 4) to the surface (O) of the respective diamond layer (3, 4).

10. The device according to any one of the preceding claims, wherein the path (5) has a width of 2 to 500 µm.

11. The device according to any one of the preceding claims, wherein the path (5) is meandering.

12. The device according to any one of the preceding claims, wherein a metal layer (12) is provided on the first (3) and/or second diamond layer (4) in a portion outside the path.

13. The device according to claim 12, wherein the metal layer (12) is formed of a self-passivating metal or of a noble metal.

14. The device of claim 13, wherein the metal includes, as a major constituent, any one of the following elements: Ti, Ta, Nb, Cr, Al, W, Au, Ag.

15. The device according to any one of claims 12 to 14, wherein between the metal layer (12) and the surface (O) of the first (3) and/or second diamond layer (4), a further intermediate layer (13) formed of a metal carbide, preferably TiC or WC, is provided.

16. The device according to any one of the preceding claims, wherein a cover layer (8) of an electrically insulating material, preferably of diamond, is provided on the first (3) and/or second diamond layer (4) at least in sections.

17. The device according to any one of claims 12 to 16, wherein the cover layer (8) or a further cover layer (14) of an electrically insulating material is provided on the metal layer (12).

18. Method for electrolysis, in particular for the production of OH radicals, oxidized chlorine compounds, oxidants, ozone, hydrogen, oxygen and/or for the cathodic precipitation of metals or metal compounds, comprising the following steps:
contacting the first (3) and second diamond layers (4) of the device according to any one of the preceding claims with an aqueous electrolyte, and
applying a voltage of 3 to 60 volts between the first (3) and second diamond layer (4), whereby an electric field is formed, the field lines of which run at least partially transversely to a longitudinal direction of the path (5).

19. Use of the apparatus according to any one of claims 1 to 17 for producing OH radicals, oxidized chlorine compounds, ozone, hydrogen and/or oxygen.

## Revendications

1. Dispositif d'électrolyse comprenant un substrat (1, 6) sur lequel sont placées une anode composée d'une première couche de diamant (3) et une cathode composée d'une seconde couche de diamant (4), la première (3) et la seconde couche de diamant (4) étant chacune constituée de diamant dopé au bore,
**caractérisé en ce que**
la première (3) et la seconde couche de diamant (4) sont séparées l'une de l'autre par un chemin (5) électriquement isolant et disposées de telle sorte que, à application d'une tension entre la première (3) et la seconde couche de diamant (4), il se forme un champ électrique dont les lignes de champ s'étendent au moins partiellement transversalement à un sens d'extension longitudinal du chemin (5).

2. Dispositif selon la revendication 1, en ce que le diamant est dopé avec 100 à 10.000 ppm de bore.

3. Dispositif selon l'une des revendications précédentes, en ce que le substrat (1, 6) (i) est constitué d'un matériau électriquement isolant ou (ii) d'un matériau électriquement conducteur, lequel est pourvu d'une couche électriquement isolante (2) sur sa face supérieure orientée vers les couches de diamant.

4. Dispositif selon la revendication 3, en ce que le matériau électriquement isolant ou la couche électriquement isolante (2) est composé de l'un des matériaux suivants : oxyde métallique, Si, SiC, diamant, SiO₂, chamotte, céramique, de préférence de la porcelaine, ou du verre.

5. Dispositif selon la revendication 3 ou 4, en ce qu'une couche intermédiaire électriquement conductrice (7) est prévue entre la première (3) et/ou la seconde couche de diamant (4) et le substrat électriquement isolant (6) ou la couche électriquement isolante (2), ladite couche intermédiaire étant constituée de Ti, Nb ou Ta.

6. Dispositif selon l'une des revendications précédentes, en ce que la première (3) et/ou la seconde couche de diamant (4) et/ou la couche électriquement isolante (2) et/ou la couche intermédiaire électriquement conductrice (7) sont réalisées au moyen du procédé CVD.

7. Dispositif selon l'une des revendications précédentes, en qu'une épaisseur de la première (3) et de la seconde couche de diamant (4) est comprise entre 5 et 100 µm.

8. Dispositif selon l'une des revendications précédentes, en ce qu'une surface (O) opposée au substrat (1, 6) de la première (3) et de la seconde couche de diamant (4) est chacune composée à plus de 50 % de facettes (11), lesquelles forment les (111) ou (001) plans de cristaux de diamant, de préférence de monocristaux de diamant (10) imbriqués.

9. Dispositif selon la revendication 8, en ce que les monocristaux de diamant (10) s'étendent essentiellement dans une direction [111] ou [110] depuis le substrat (1, 6) ou une couche intermédiaire (7) prévue entre le substrat (1, 6) et la couche de diamant (3, 4) respective jusqu'à la surface (O) de la couche de diamant (3, 4) respective.

10. Dispositif selon l'une des revendications précédentes, en ce que le chemin (5) a une largeur comprise entre 2 et 500 µm.

11. Dispositif selon l'une des revendications précédentes, en ce que le chemin (5) est réalisé sous forme de méandre.

12. Dispositif selon l'une des revendications précédentes, en ce qu'une couche de métal (12) est prévue sur la première (3) et/ou la seconde couche de diamant (4) dans une section à l'extérieur du chemin.

13. Dispositif selon la revendication 12, en ce que la couche de métal (12) est constituée d'un métal passif ou d'un métal précieux.

14. Dispositif selon la revendication 13, en ce que le métal contient comme constituant principal l'un des éléments suivants : Ti, Ta, Nb, Cr, Al, W, Au, Ag.

15. Dispositif selon l'une des revendications 12 à 14, en ce qu'une autre couche intermédiaire (13) composée d'un carbure métallique, de préférence de TiC ou de WC, est prévue entre la couche de métal (12) et la surface (O) de la première (3) et/ou de la seconde couche de diamant (4).

16. Dispositif selon l'une des revendications précédentes, en ce qu'une couche de recouvrement (8) en un matériau électriquement isolant, de préférence en diamant, est prévue au moins partiellement sur la première (3) et/ou la seconde couche de diamant (4).

17. Dispositif selon l'une des revendications 12 à 16, en ce que la couche de recouvrement (8) ou une autre couche de recouvrement (14) en un matériau électriquement isolant est prévue sur la couche de métal (12).

18. Procédé d'électrolyse, en particulier pour la fabrication de radicaux HO, de composés chlorés oxydés, d'oxydants, d'ozone, d'hydrogène, d'oxygène et/ou de précipitation cathodique de métaux ou de composés métalliques comprenant les étapes suivantes consistant à :
mettre en contact la première (3) et la seconde couche de diamant (4) du dispositif selon l'une des revendications précédentes avec un électrolyte aqueux, et
appliquer une tension comprise entre 3 et 60 volt entre la première (3) et la seconde couche de diamant (4), en ce qu'un champ électrique se forme dont les lignes de champ s'étendent au moins partiellement transversalement à un sens d'extension longitudinal du chemin (5).

19. Utilisation du dispositif selon l'une des revendications 1 à 17 pour la fabrication de radicaux HO, de composés chlorés oxydés, d'ozone, d'hydrogène et/ou d'oxygène.
